# EUROPÄISCHE PATENTANMELDUNG

(11) **EP 0 784 161 A1**
(43) Veröffentlichungstag der Anmeldung: **16.07.1997**
(21) Anmeldenummer: 97100327.2
(22) Anmeldetag: 10.01.1997
(51) Int. Cl.: F16B 37/06

(54) **Verbindungselement**

(30) Priorität: 12.01.1996 DE 29600949 U
(71) Anmelder: RICHARD BERGNER GMBH & CO, 91124 Schwabach (DE)
(72) Erfinder: Wissmeier, Hans-Jürgen Dr., D-91166 Georgensgmünd (DE)
(74) Vertreter: Tergau, Enno, Dipl.-Ing.

(57) **Zusammenfassung**

Bei einem Verbindungselement zum Einnieten in mindestens ein Bauteil (4, 4', 4''), mit einer Nietmutter (1, 1') mit einem Haltekragen (6, 6') und mit einem ein Innengewinde (2) aufweisenden Bund (3, 3') entspricht erfindungsgemäß die Gewindehöhe (H₄) mindestens der Bundhöhe (H₂), wobei die Bundhöhe (H₂) die Bauteildicke (H₁) übersteigt. Die Umfangswand des Freiendes (11, 11') des Bundes (3, 3') ist dabei wirksamer Nietbereich ist. Das zum Einnieten in mindestens ein Blech- oder Bauteil (4, 4', 4'') vorgesehene Verbindungselement eignet sich für den Einsatz bei beengten Platzverhältnissen und dicken Blech- oder Kunststoffteilen bzw. Blechpaketen sowie besonders für den Einsatz in einzelne dünne Bauteile.

## Beschreibung

Die Erfindung bezieht sich auf ein Verbindungselement gemäß dem Oberbegriff des Anspruchs 1. Dabei wird unter Verbindungselement insbesondere eine Nietmutter verstanden.

Eine derartige Nietmutter ist z. B. aus der deutschen Offenlegungsschrift 28 18 756 bekannt Die bekannte Nietmutter weist einen die eigentliche Mutter bildenden Gewindebereich auf, an den ein stirnseitig aus der Nietmutter herausstehender Nietbereich angeformt ist. Dieser außerhalb des Gewindebereichs der Nietmutter liegende Nietbereich wird zum Adaptieren der Nietmutter an einem Blechteil plastisch verformt und somit am Blechteil vernietet, wobei auch das Blechteil im Nietbereich verformt wird.

Aus z. B. der internationalen Anmeldung WO 82/02579 ist auch eine sogenannte Einpreßmutter bekannt. Diese Einpreßmutter ist an deren Stirnseite mit einer Hinterschneidung versehen, in die das mit der Einpreßmutter zu verbindende Blechteil eingepreßt wird Charakteristisch sowohl für die bekannte Nietmutter als auch für die bekannte Einpreßmutter ist, daß beide Muttern mit dem überwiegenden Anteil ihrer Eigenbauhöhe auf einer Seite des Blechteils angeordnet sind und entsprechend aus dieser Seite hinausstehen. Diese Eigenbauhöhe übersteigt üblicherweise die Blechdicke um ein Vielfaches. Schließlich kann jeweils nur ein einziges Blechteil mit der Einpreßmutter bzw. Nietmutter verbunden werden

Wegen dieser Eigenschaften kann die vorbeschriebene Niet- bzw. Einpreßmutter dort nicht verwendet werden, wo nur geringe Einbauhöhen verfügbar sind. In diesem Fall sind die Muttern bei vollständig benötigter Gewindelänge zu hoch oder die Gewindelänge erfüllt bei angepaßter Bauhöhe nicht die an die Schraubverbindung gestellten Anforderungen oder Eigenschaften Des weiteren ist die Verwendung der bekannten Nietmutter oder Einpreßmutter bei marktublichen Systemen nur auf geringe Blechdicken begrenzt Ferner nehmen die Auspreßkrafte mit sinkender Festigkeit des Bleches rapide ab Darüber hinaus gehen die Auspreßkräfte bei einer Biegebeanspruchung der Verbindung erheblich zurück.

Der Erfindung liegt daher die Aufgabe zugrunde, ein Verbindungselement der eingangs genannten Art anzugeben, welches in plattenförmige Bauteile unterschiedlicher Stärke (Dicke) und verschiedener Materialien oder in mehrere übereinanderliegende Bauteile oder Blechtafeln besonders einfach und mit sicherem Halt einbringbar ist.

Diese Aufgabe wird erfindungsgemäß gelöst durch die Merkmale des Anspruchs 1. Dabei ist ein an einen Haltekragen angesetzter Bund oder Gewindehohlschaft einer Nietmutter derart dimensioniert, daß die Bundhöhe die Bauteil- oder Blechdicke übersteigt, und daß die Gewindehöhe mindestens der Bundhohe entspricht. Der eigentliche Nietbereich wird dann durch das im Montagezustand das Bauteil uberragende freie Ende des Bundes gebildet. Die Gewindeöffnung der Nietmutter kann dabei eine Durchgangsöffnung oder ein Sackloch sein.

Unabhängig von der Dicke jedes Bauteils oder der Anzahl von Blechteilen innerhalb eines Blechpaketes erstreckt sich das Innengewinde der Nietmutter vorteilhafterweise über die gesamte Nietmutternhöhe, zumindest aber uber die gesamte Bundhöhe, und ist somit auch in dessen Freiende weitergeführt, das seinerseits über das Bauteil hinausragt Dies ermöglicht eine besonders einfache Fertigung der Nietmutter, wobei die gleiche Nietmutter für verschiedene metallische oder nicht-metallische Bauteile unterschiedlicher Dicke verwendet werden kann.

In zweckmäßiger Ausgestaltung ist der an den hülsenförmigen Bund der Nietmutter angeformte kreisringförmige oder mehreckige Haltekragen mit in Richtung auf das Bauteil weisenden rippenartigen Vorsprüngen versehen. Solche Geometrieelemente in Form von Rippen können in die Mutternauflagefläche zum Blech oder nicht-metallischen Bauteil hin eingepreßt werden. Dabei wird die Nietmutter in einem ersten Preßgang derart in die Auflagefläche des Bauteils eingepreßt, daß die Rippen die Auflagefläche des Bauteils verformen und komplementäre Aufnahmenuten fur die Rippen gebildet werden. Bei angebrachter Nietmutter liegen die Rippen in den Aufnahmenuten formschlüssig ein und bilden so eine Verdrehsicherung für die Nietmutter. Vorzugsweise ist bei dieser Art der Verdrehsicherung der Außendurchmesser des Bundes der Nietmutter geringfügig kleiner als die lichte Weite einer deren Bund aufnehmenden Durchgangsbohrung des Bauteils. Dadurch ist gewährleistet, daß die Nietmutter beim Einsetzen reibungsfrei in die Durchgangsbohrung hineinfallen kann.

Alternativ kann als Geometrieelement zur Bildung einer Verdrehsicherung der Bund der Nietmutter mantelseitig mit einer Rändelung versehen sein. Im ersten Preßvorgang wird dann die Nietmutter derart in die Durchgangsbohrung des Bauteils oder Blechteils eingepreßt, daß dort komplementäre Aufnahmenuten in Form von Längsriefen eingeformt werden. Dazu ist der Außendurchmesser des Bundes geringfügig größer als die lichte Weite der Durchgangsbohrung.

Zum Fixieren der Nietmutter auf dem Bauteil oder dem Bauteilpaket steht das dem flanschartigen Haltekragen abgewandte Freiende der Nietmutter stirnseitig uber die Bauteiltafel bzw. das Bauteilpaket hinaus. Zur Fixierung wird nicht das Bauteil verformt, sondern es wird das Freiende der Nietmutter derart verformt, daß ein Ringvorsprung am Freiende entsteht. Dieser Ringvorsprung wirkt mit dem Bauteil bzw dem Blechpaket nach Art einer Hinterschneidung zusammen. Das Bauteil ist dann im Montageendzustand zwischen dem Haltekragen und dem Ringvorsprung gehalten bzw. eingespannt. Der Ringvorsprung wirkt somit als Niet für die Nietmutter.

Wesentlich dabei ist die Anbringung des Nietbereichs bzw. der als Nietbereich wirksamen Hinterschneidung gerade nicht an der Stirnseite der Nietmutter, sondern an deren Umfang. Dadurch kann bei eingepreßter Nietmutter einerseits eine besonders geringe Erhebung an der dem Haltekragen zugewandten Bauteilseite realisiert werden. Andererseits kann durch unterschiedlich weites Vernieten der Ringvorsprung in unterschiedlicher Höhe liegen, so daß Bauteile, insbesondere Bleche, verschiedener Dicke mit der gleichen Nietmutter vernietet werden können. Dabei bleibt die gesamte Gewindehöhe erhalten, da das Innengewinde der Nietmutter vorteilhafterweise unverformt bleibt. Daher kann der Nietvorgang auch dann durchgeführt werden, wenn in die Nietmutter eine z. B. ein weiteres Bauteil tragende Schraube bereits eingeschraubt ist. Mit anderen Worten: Im Anschluß an einen Nietvorgang ist entlang des Freiendes des Bundes der Nietmutter lediglich der äußere Mantelbereich verformt, wahrend der innere Mantelbereich unverformt bleibt.

In weiterer Ausgestaltung der Nietmutter ist der Haltekragens derart bemessen, daß dessen Höhe kleiner oder gleich einer auf einer Seite des Bauteils oder Blechteils vorgesehenen Vertiefung im Bereich der Durchgangsöffnung ist, so daß die dort eingesetzte Nietmutter auf dieser Seite mit der Auflagefläche des Blechteils fluchtet Dadurch ist gewährleistet, daß ein auf dieser Seite angeschraubtes weiteres Bauteil auch im Bereich der Nietmutter vollflächig am Blechteil anliegt. Alternativ kann die Nietmutter auch umgekehrt, d. h. um 180° gedreht, in die Durchgangsbohrung des mit der Vertiefung versehenen plattenförmigen Blech - oder Bauteils eingesetzt werden, so daß nun in entsprechender Weise ein auf der gegenuberliegenden Seite des Bauteils angeschraubtes Bauteil vollflächig anliegt.

Die mit der Erfindung erzielten Vorteile bestehen insbesondere darin, daß durch Ausgestaltung eines Verbindungselements in Form einer Nietmutter mit an eine Durchgangsbohrung eines Bauteils angepaßtem Hülsenbund mit zumindest der Bundhöhe entsprechender Gewindehöhe und mit angeformtem dünnwandigen Haltekragen auch Bauteile mit großer Eigenstärke oder Bauteildicke sowie Bleche geringer Festigkeit oder auch ein mehrere Blechtafeln enthaltendes Blechpaket mit einem stabilen Gewindeelement versehen werden können. Weiterhin können Bleche mit unterschiedlicher Eigendicke oder Eigenstärke mit Nietmuttern gleicher Bauhohe versehen werden. Das Verbindungselement ist daher besonders bei beengten Platzverhältnissen und Blechteilen großer Dicke vorteilhaft einsetzbar, da insbesondere im Gegensatz zu lediglich stirnseitig mit dem Blechteil verbundenen Verbindungselementen die gesamte Blechstärke für die verwendbare Gewindelänge genutzt wird. Auch ist das Verbindungselement zur Bestückung dünnwandiger Blechteile mit einem Gewindeteil in Form der Nietmutter besonders geeignet, da unabhängig von der Blechdicke stets eine ausreichende Anzahl von Gewindegängen vorhanden ist.

Aufgrund der Ausgestaltung der Nietmutter ist insbesondere auch die Vernietung von nicht umformbaren oder weichen plattenförmigen Bauteilen möglich. So können z. B. auch Kunststoffbauteile vernietet werden, wobei dann unter dem Ringvorsprung, d. h. zwischen dem Ringvorsprung und der diesem zugewandten Bauteilfläche eine Metall- oder Zwischenlegscheibe vorgesehen sein sollte. Die Ausgestaltung der Nietmutter ermöglicht darüber hinaus vorteilhafterweise die Verwendung von Leichtmetall, z. B. von Aluminium, als Nietmutternmaterial, was den Einsatz bei gewünschter oder geforderter Leichtbauweise ermöglicht. Die Verdrehsicherung der Nietmutter wird dann zweckmäßigerweise durch die mantelseitige Rändelung des Bundes ermöglicht.

Ausführungsbeispiele der Erfindung werden anhand einer Zeichnung naher erläutert. Darin zeigen:
- Fig. 1 und 2: eine erfindungsgemäße Nietmutter als Verbindungselement in einem Blechteil vor bzw. nach einem Nietvorgang und
- Fig. 3: Ausführungsvarianten des Verbindungselements gemäß den Figuren 1 und 2 sowie
- Fig. 4: ein Verbindungselement gemäß Figur 1 mit eingeschraubtem Bauteil.

Einander entsprechende Teile sind in allen Figuren mit den gleichen Bezugszeichen versehen.

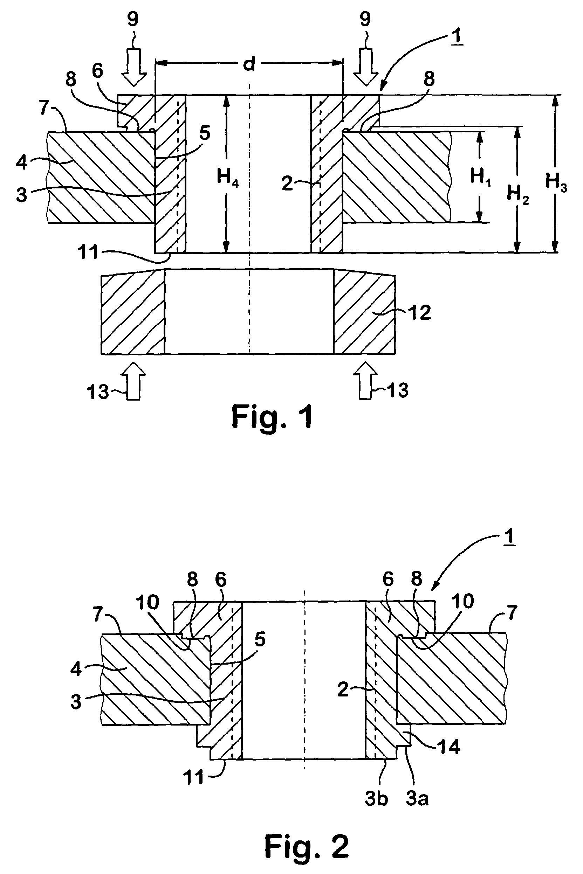

Gemäß den Darstellungen in den Figuren 1 und 2 ist die z. B. metallische Nietmutter 1 mit deren hülsenförmigen, ein Innengewinde 2 aufweisenden Bund 3 in eine in ein Blech oder Blechteil 4 vorab eingebrachte Bohrung 5 eingeschoben. Dabei ist die lichte Weite der Durchgangsbohrung 5 geringfügig großer als der Außendurchmesser d des hülsenförmigen Bundes 3 der Nietmutter 1. Ein flanschartiger Haltekragen 6 der Nietmutter 1 liegt hierbei auf einer Auflagefläche 7 des Blechteils 4 auf. Aus dem Haltekragen 6 springen stirnseitig strahlenförmig verlaufende Rippen 8 vor.

Beim Einpressen der Nietmutter 1 in einem ersten Preßvorgang in Einpreßrichtung 9 verformen die Rippen 8 die Auflageflache 7 unter Bildung der zu den Rippen 8 komplementär ausgebildeten Aufnahmenuten 10 (Fig. 2). Die Kombination aus Rippen 8 und Aufnahmenuten 10 bewirkt eine Verdrehsicherung für die Nietmutter 1.

Die eigentliche Fixierung der Nietmutter 1 erfolgt durch ein kombiniertes Schneiden und Pressen der Umfangswand der Nietmutter 1 im Bereich des dem Haltekragen 6 abgewandten Freiendes 11 in einem weiteren Preßvorgang. Am Freiende 11 wird ein kombinierter Schneid- und Preßstempel 12 in entgegen der Einpreßrichtung 9 gerichteter Verformungsrichtung 13 bewegt. Der Schneide- und Preßstempel 12 schneidet hierbei aus dem Nietmutterumfang Teilbereiche aus und verformt den Nietmutternkörper derart, daß am Freiende 11 ein Ringvorsprung 14 entsteht. Der infolge des Ringvorsprungs 14 entstehende Hinterschnitt ist wesentlich stabiler dimensioniert als eine übliche Hinterlegung oder Hinterschneidung bei den aus dem Stand der Technik bekannten Einpreßmuttern. Mit der Nietmutter 1 ist es möglich, Bleche 4 verschiedener Dicke H₁ bei einheitlicher Bundhöhe H₂ und einheitlicher Nietmutternlänge oder Nietmutternhöhe H₃ miteinander zu verbinden, wobei H₁ < H₂< H₃ ist.

Ferner erfolgt eine Umformung nur an der Nietmutter 1, während das Blech 4 unverformt bleibt Es ist somit möglich, Verbindungselemente auch in schlecht ver- oder umformbare plattenförmige Bauteile, beispielsweise auch aus Kunststoff bestehende Bauteile, einzubringen. Eventuelle Beschädigungen des Kunststoffs können durch zwischengeschaltete Metallscheiben vermieden werden.

Die als Verbindungselement wirksame Nietmutter 1 bietet infolge ihrer vorerwähnten Eigenschaften speziell bei dicken Blechen 4 infolge der vollständigen Ausnutzung der Blechdicke H₁ für die nutzbare Gewindehöhe oder -lange H₄ Vorteile gegenüber Verbindungselementen nach dem Stand der Technik. Die nutzbare wirksame Gewindehöhe H₁ entspricht gemäß Fig. 2 der axialen Länge und damit der Höhe H₃ der Nietmutter 1 im Montageendzustand. Die wirksame Gewindelange H₄ entspricht also zweckmäßigerweise der maximalen Bauhöhe des Gesamtverbunds 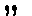 Blech-Verbindungselement". Zumindest entspricht die Gewindehohe H₄ der Höhe H₂ des Bundes 3.

Darüber hinaus können höhere Auspreßkräfte auch bei niederfesten Werkstoffen, beispielsweise Leichtmetallen, Kunststoffen und Faserverbundwerkstoffen realisiert werden Weiterhin können mehrere Bleche 4 aus unterschiedlichen Werkstoffen miteinander verbunden werden Ferner kann die Nietmutter 1 selbst aus Leichtmetall bestehen, so daß diese auch bei der Leichtbauweise eingesetzt werden kann. In jedem Fall wird - wie Fig.2 zeigt - beim Nietvorgang zur Bildung des Ringvorsprungs 14 lediglich der äußere Mantelbereich 3a des Bundes 3 der Nietmutter 1 verformt, so daß der innere Mantelbereich 3b und damit das Innengewinde 2 unverformt bleibt.

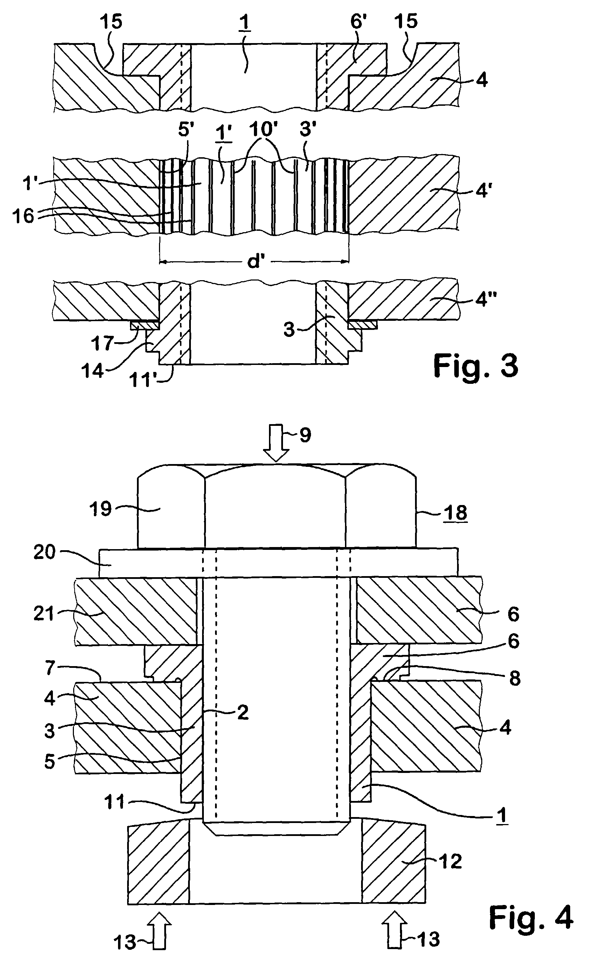

Außerdem kann der Haltekragen 6', wie in Fig. 3 gezeigt ist, auch innerhalb einer Vertiefung 15 im Bereich der Bohrung 5 liegen und ohne Rippen 8 ausgestaltet sein. Der Haltekragen 6' schließt dann bündig mit dem Blechteil 4 ab. Dadurch kann ein zusätzliches Bauteil 21 (Fig. 4) auf der dem Haltekragen 6' zugewandten Seite des Bauteils 4 auch im Bereich der Nietmutter 1' plan an das Bauteil 4 angelegt und dort mittels der Nietmutter 1' verschraubt werden. Dabei ist der Haltekragen 6' z. B. kreisförmig ausgebildet. Der Haltekragen 6, 6' ist jedoch zweckmäßigerweise mehreckig, z. B. vier- oder sechseckig. Durch die eckige Form des Haltekragens 6, 6' kann ein Verkanten von mehreren, hintereinander zur Vernietung geführten Nietmuttern 1 bzw. 1' vermieden werden.

Der mittlere Teil der Fig. 3 zeigt eine z. B. aus Leichtmetall bestehende Nietmutter 1', deren Bund 3' mit am Umfang verteilt angeordneten Riefen zur Bildung einer Rändelung 16 versehen ist. Der Außendurchmesser d' des Bundes 3' ist hierbei geringfügig größer als der Durchmesser der Bohrung 5' im Bauteil 4'. Die Rändelung 16 dient - ebenso wie die Rippen 8 des Haltekragens 6 - als Verdrehsicherung Beim Einpressen der Nietmutter 1' im ersten Preßvorgang werden hier zur Rändelung 16 komplementäre Längsriefen 10 in der Bohrungswand gebildet.

Der untere Teil der Fig. 3 zeigt die Zwischenlage einer Metallscheibe 17 zwischen dem Ringvorsprung 14 und dem z. B. aus Kunststoff bestehenden Bauteil 4''. Die Metallscheibe 17 verhindert eine Verformung oder Zerstörung des aus Kunststoff oder aus sprödem Material bestehenden Bauteils 4'' während des Nietvorgangs Nicht gezeigt ist eine mögliche Umkehrung der Anordnung der Nietmutter 1'. In einem solchen Fall liegt das Freiende 11' der Nietmutter 1' in der Vertiefung 15 und ist mit dem Bauteil 4 bündig. Der Haltekragen 6' ist dann - im Unterschied zur in Fig. 3 dargestellten Lage - auf der gegenüberliegenden Seite des Bauteils 4 angeordnet. Dadurch kann analog das zusätzliche Bauteil 21 auch auf dieser gegenüberliegenden Seite des Bauteils 4 im Bereich des Freiendes 11' der Nietmutter 1' plan an das Bauteil 4 angelegt und dort mittels der Nietmutter 1' verschraubt werden.

Fig. 4 zeigt eine Ausführungsform, bei welcher eine Schraube 18 bereits in das Gewinde 2 der Nietmutter 1 eingeschraubt ist. Die Nietmutter 1 und die Schraube 18 halten hierbei zwischen dem Haltekragen 6 und einer unterhalb des Schraubenkopfes 19 vorgesehenen Zwischenlegscheibe 20 ein weiteres Bauteil 21. Es ist somit möglich, die Nietmutter 1 mit bereits verschraubtem Bauteil 21 mit dem Blech 4 mit Hilfe des kombinierten Schneide- und Preßstempels 12 wie vorerwähnt zu vernieten, zumal der das Innengewinde 2 tragende innere Mantelbereich 3b des Bundes 3 unverformt bleibt.

### Bezugszeichenliste

- 1: Nietmutter
- 2: Innengewinde
- 3: Bund
- 3a: außerer Mantelbereich
- 3b: innerer Mantelbereich
- 4: Blechteil
- 5: Bohrung
- 6: Haltekragen
- 7: Auflagefläche
- 8: Rippe
- 9: Einpreßrichtung
- 10: Aufnahmenut
- 11: Freiende
- 12: Schneide- und Preßstempel
- 13: Verformungsrichtung
- 14: Ringvorsprung / Hinterschneidung
- 15: Vertiefung
- 16: Riefen
- 17: Metallscheibe
- 18: Schraube
- 19: Zwischenraum
- 20: Schraubenkopf
- 21: Bauteil
- d: Außendurchmesser
- H₁: Blechdicke
- H₂: Bundhöhe
- H₃: Nietmutternhohe
- H₄: wirksame Gewindelange / -höhe

## Patentansprüche

1. Verbindungselement zum Einnieten in mindestens ein plattenförmiges Bauteil (4, 4, 4''), insbesondere in ein Blechteil, mit einer Nietmutter (1, 1') mit einem Haltekragen (6, 6') und mit einem ein Innengewinde (2) aufweisenden Bund (3, 3'),
dadurch gekennzeichnet,
daß die Gewindehöhe (H₄) mindestens der Bundhöhe (H₂) entspricht, wobei die Bundhöhe (H₂) die Bauteildicke (H₁) übersteigt.

2. Verbindungselement nach Anspruch 1,
dadurch gekennzeichnet,
daß das dem Haltekragen (6, 6') gegenüberliegende und das Bauteil (4, 4', 4'') überragende Freiende (11, 11') des Bundes (3, 3') wirksamer Nietbereich ist.

3. Verbindungselement nach Anspruch 1 oder 2,
dadurch gekennzeichnet,
daß im Anschluß an einen Nietvorgang lediglich die Nietmutter (1, 1') in der Art einer Hinterschneidung verformt ist.

4. Verbindungselement nach einem der Ansprüche 1 bis 3,
dadurch gekennzeichnet,
daß im Anschluß an einen Nietvorgang am Freiende (11, 11') des Bundes (3, 3') ein Ringvorsprung (14) gebildet ist, wobei das Innengewinde (2) unverformt bleibt.

5. Verbindungselement nach Anspruch 4,
dadurch gekennzeichnet,
daß unterhalb des Ringvorsprungs (14) eine Metallscheibe (17) vorgesehen ist.

6. Verbindungselement nach einem der Ansprüche 1 bis 5,
dadurch gekennzeichnet,
daß die Nietmutter (1, 1') Geometrieelemente (8, 16) zur Verdrehsicherung aufweist.

7. Verbindungselement nach Anspruch 6,
dadurch gekennzeichnet,
daß aus dem Haltekragen (6) mindestens ein rippenartiger Vorsprung (8) in Richtung auf das Bauteil (4) hervorsteht.

8. Verbindungselement nach Anspruch 6 oder 7,
dadurch gekennzeichnet,
daß der Außendurchmesser (d) des zylinderförmigen Bundes (3) geringfügig kleiner ist als die lichte Weite einer diesen aufnehmenden Durchgangsbohrung (5) des Bauteils (4).

9. Verbindungselement nach Anspruch 7 oder 8,
dadurch gekennzeichnet,
daß in einem ersten Preßvorgang die Nietmutter (1) derart in die Auflagefläche (7) des Bauteils (4) eingepreßt ist, daß dort eine komplementäre Aufnahmenut (10) gebildet ist.

10. Verbindungselement nach Anspruch 6,
dadurch gekennzeichnet,
daß der Bund (3') der Nietmutter (1') mantelseitig eine Rändelung (16) aufweist, wobei der Außendurchmesser (d') des Bundes (3') geringfügig größer ist als die lichte Weite einer diesen aufnehmenden Durchgangsbohrung (5') des Bauteils (4').

11. Verbindungselement nach Anspruch 10,
dadurch gekennzeichnet,
daß in einem ersten Preßvorgang die Nietmutter (1') derart in die Durchgangsbohrung (5') des Bauteils (4') eingepreßt ist, daß dort komplementäre Aufnahmenuten (10') gebildet sind.

12. Verbindungselement nach einem der Ansprüche 1 bis 11,
dadurch gekennzeichnet,
daß die Nietmutter (1, 1') mit eingeschraubter Schraube (18) vernietbar ist.

13. Verbindungselement nach einem der Ansprüche 1 bis 12,
dadurch gekennzeichnet,
daß die Nietmutter (1, 1') aus Leichtmetall besteht.
